# EUROPEAN PATENT SPECIFICATION

(11) **EP 2 334 196 B1**
(45) Date of publication and mention of the grant of the patent: **29.08.2012**
(21) Application number: 09792339.5
(22) Date of filing: 09.09.2009
(51) Int. Cl.: A23K 1/00, A23K 1/16, A23K 1/18

(54) **ANIMAL FEED KIBBLE WITH PROTEIN-BASED CORE AND RELATED METHODS**
TIERFUTTERBROCKEN MIT KERN AUF PROTEINBASIS UND VERWANDTE METHODEN
GRANULES D ALIMENT POUR ANIMAUX AVEC UN NOYAU À BASE DE PROTÉINES ET PROCÉDÉS ASSOCIÉS

(30) Priority: 11.09.2008 US 96127 P
(43) Date of publication of application: 22.06.2011
(73) Proprietor: The IAMS Company, Cincinnati, OH 45202 (US)
(72) Inventor: SUNVOLD, Gregory, Dean, Lewisburg Ohio 45338 (US); BRENT, John, Leslie, Jr., Springboro Ohio 45066 (US); CORRIGAN, Patrick, Joseph, Glendale Ohio 45246 (US); HAYEK, Michael, Griffin, Dayton Ohio 45414 (US)
(74) Representative: Kellenberger, Jakob
(86) International application number: PCT/US2009/056292
(87) International publication number: WO 2010/030614

(56) References cited:
- WO-A1-2007/019227
- US-A- 4 366 175
- US-A- 5 968 569
- US-A1- 2002 090 444

## Description

### FIELD OF THE INVENTION

The present invention is related to animal feed kibbles having a protein-based core that is substantially free of a matrix of gelatinized starch. In certain embodiments, the animal feed kibble may further comprise at least one active coating on the surface of the protein-based core. In specific embodiments, the active coating may include a probiotic micro-organism. Other embodiments relate to coatings for probiotic microorganisms and methods for assessing bioactivity of probiotics in food compositions.

### BACKGROUND OF THE INVENTION

Kibble-type animal feeds, such as dog and cat foods, are dried, ready-to-eat pet food products. The kibbles may be formed by an extrusion process where the kibble raw materials are extruded under heat and pressure to form the pelletized kibble form. Extrusion technology provides a cheap and efficient method for formulating animal feed kibbles, such as those having a starch matrix. During the extrusion process, the starch matrix typically becomes gelatinized under the extrusion conditions.

The defense mechanisms to protect the mammalian gastrointestinal (GI) tract from colonization by pathogenic bacteria are highly complex. The GI tracts of most mammals are colonized by native microflora, and invasive pathogenic micro-organisms. In a healthy individual, these competing microflora are in a state of equilibrium. Modification of the intestinal microflora equilibrium may lead to or prevent many GI disorders, both in humans and other mammalian species, such as companion animals, including, for example, cats, dogs, and rabbits. The well being of companion animals is closely related to their feeding and GI health, and maintenance of the intestinal microflora equilibrium in these animals may result in healthier pets.

The number and composition of the intestinal microflora tend to be stable, although age and diet may modify it. Gastric activity, bile, intestinal peristalsis and local immunity are factors thought to be important in the regulation of bacterial flora in the small intestine of human beings and various other mammals. Often, pet GI disorders, including those found in canines and felines, are linked to bacterial overgrowth and the production of enterotoxins by pathogenic bacteria. These factors disrupt the intestinal microflora equilibrium and can promote inflammation and aberrant immune response.

Research has begun to highlight some valuable strains of bacteria and their potential uses as probiotic agents. Probiotics are considered to be preparations of bacteria, either viable or dead, their constituents such as proteins or carbohydrates, or purified fractions of bacterial ferments that promote mammalian health by preserving and/or promoting the natural microflora in the GI tract, and reinforcing the normal controls on aberrant immune responses.

There is a desired goal of improving the health of companion animals. However, many of these ingredients can be costly, sensitive to effects of extrusion or other production methods, and/or sensitive to product stability (exposure to oxygen or moisture). Further, determining whether a probiotic in a food composition will be bioactive may present problems. Identifying new product designs where these challenges are overcome would enable products to be made that satisfy the goal of consumers to provide improved health benefits to their companion animals. Thus, there is a need for improved kibble matrices and for probiotic kibbles and kibble animal feeds for companion animals. Further, methods for assessing probiotic bioactivity are also needed.

### SUMMARY OF THE INVENTION

The present invention relates to an animal feed kibble comprising: a protein-based core matrix that is greater than 70% by weight of a vegetable protein, wherein the protein-based core is free of a matrix of gelatinized starch; and at least one coating comprising a fat and at least one additive, wherein the coating is on a surface of the protein-based core.

The present invention further encompasses a method for forming an animal feed kibble comprising: extruding a protein-based core matrix that is greater than 70% by weight of a vegetable protein, wherein the protein-based core is substantially free of a matrix of gelatinized starch; and coating at least a portion of a surface of the protein-based core matrix with a coating comprising a probiotic.

Furthermore the present invention encompasses a kibble-type pet food comprising:
a first kibble comprising: a source of protein of from 16% to 50% by weight of the first kibble; a source of fat of from 5% to 35% by weight of the first kibble; and a source of carbohydrate; and a second kibble comprising : a protein-based core matrix that is greater than 70% by weight of a vegetable protein , wherein the protein-based core is free of a matrix of gelatinized starch, wherein the second kibble further comprises: at least one active coating on at least a portion of a surface of the protein-based core matrix and wherein the at least one active coating is a probiotic-enriched coating.

### BRIEF DESCRIPTION OF THE DRAWINGS

The various embodiments set forth in the Description of the Invention will be better understood with reference to the following drawings, wherein:
Figures 1-3 illustrate flowcharts representing the steps associated with various embodiments of the methods for assessing the bioactivity of a probiotic food composition.

### DETAILED DESCRIPTION OF THE INVENTION

### Definitions

As used herein, the term "comprising" means various components conjointly employed in the preparation of the compositions of the present disclosure. Accordingly, the terms "consisting essentially of" and "consisting of" are embodied in the term "comprising".

As used herein, the articles including "the", "a" and "an" when used in a claim or in the specification, are understood to mean one or more of what is claimed or described.

As used herein, the terms "include", "includes" and "including" are meant to be non-limiting.

As used herein, the term "plurality" means more than one.

As used herein, the term "gelatinized starch" includes starch that has been heated in the presence of water, such that the hydrogen bonding sites on the starch anhydroglucose backbone engage with and hydrogen bond with a greater number of water molecules resulting in a more amorphous, less crystalline structure.

As used herein, the term "matrix" when used in reference to component of a kibble, means the component forms a continuous network throughout the portion of the kibble, for example, the core of the kibble.

As used herein, the term "substantially free" when used in reference to gelatinized starch means that the core matrix includes less than 10% by weight of gelatinized starch, or even less than 5% by weight of gelatinized starch.

As used herein, the term "kibble" alone includes a particulate pellet like component of animal feeds, such as dog and cat feeds, typically having a moisture content of less than 12% by weight. Kibbles may range in texture from hard to soft. Kibbles may range in internal structure from expanded to dense. Kibbles may be formed by an extrusion process.

As used herein, the terms "probiotic" or "probiotic organism" mean bacteria or other microorganism, either viable or dead, their constituents such as proteins or carbohydrates, or purified fractions of bacterial ferments, including those in the dormant state and spores, that are capable of promoting mammalian health by preserving and/or promoting the natural microflora in the GI tract, and reinforcing the normal controls on aberrant immune responses.

As used herein, the term "enriched" means an object or structure having a greater amount of the enriched component compared to an object or structure that is not enriched with the component. According to certain embodiments, an enriched object or structure will have at least 5% more of the enriched component compared to the non-enriched object or structure.

As used herein, the term "animal" and "pet" means a domestic animal including, but not limited to domestic dogs, cats, horses, cows, ferrets, rabbits, pigs and the like. Domestic dogs and cats are particular examples of pets.

As used herein, the terms "animal feed", "animal feed compositions', animal feed kibble", "pet food" or "pet food composition" mean a composition intended for ingestion by a pet. Pet foods may include, without limitation, nutritionally balanced compositions suitable for daily feed, as well as supplements (e.g., treats) which may or may not be nutritionally balanced.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Referenced herein may be trade names for components including various ingredients utilized in the present disclosure. The inventors herein do not intend to be limited by materials under any particular trade name. Equivalent materials (e.g., those obtained from a different source under a different name or reference number) to those referenced by trade name may be substituted and utilized in the descriptions herein.

In the description of the various embodiments of the present disclosure, various embodiments or individual features are disclosed. As will be apparent to the ordinarily skilled practitioner, all combinations of such embodiments and features are possible and can result in preferred executions of the present disclosure. While various embodiments and individual features of the present invention have been illustrated and described, various other changes and modifications can be made without departing from the spirit and scope of the invention. As will also be apparent, all combinations of the embodiments and features taught in the foregoing disclosure are possible and can result in preferred executions of the invention.

### Kibbles with Vegetable Protein-Based Core

Various non-limiting embodiments of the present disclosure include an animal feed kibble comprising a protein-based core matrix that is substantially free of a matrix of gelatinized starch. Other embodiments include methods of forming the animal feed kibble compositions disclosed herein. Still other embodiments of the present disclosure include kibble-type pet foods. In specific embodiments, the animal feed kibble may be designed to incorporate a coating comprising at least one additive, such as, but not limited to a probiotic or other biologic.

According to the present disclosure provides an animal feed kibble comprising a protein-based core matrix that is greater than 70% by weight of a vegetable protein, wherein the protein-based core is substantially free of a matrix of gelatinized starch; and at least one coating comprising a fat and at least one additive, wherein the coating is on a surface of the protein-based core. In specific embodiments, the protein-based core matrix may comprise greater than 80% by weight of a vegetable protein. In still other embodiments the protein-based core matrix may comprise greater than 85%, 90% or even 95% by weight of a vegetable protein. Specific examples of vegetable proteins include any vegetable derived protein that is substantially free or can be modified or manufactured to be substantially free of gelatinized starch. Examples of vegetable proteins suitable for use in the various embodiments of the present disclosure include, but are not limited to, distiller's dried grains ("DDG"), distiller's dried grain solubles ("DDGS"), corn protein concentrate ("CPC"), corn gluten meal ("CGM"), soy protein isolate ("SPI"), soy protein concentrate ("SPC"), wheat gluten ("WG"), rice protein isolate ("RPI"), rice protein concentrate ("RPC"), sorghum protein concentrate ("SorgPC"), oat protein concentrate ("OPC"), barley protein concentrate ("BPC"), and combinations of any thereof. In particular embodiments, the vegetable protein may be DDGS, CPC, or SPI. In one specific embodiment, the vegetable protein may be CPC.

Animal based protein is a common component in animal feeds, particularly for carnivorous or omnivorous animals. However, certain animal based protein kibbles may contain specific compounds and components that can give the animal food an undesirable odor. Animal foods with desirable aromas may attract the animal to eat a nutrition product and may also be pleasing to the pet owner, such as with companion animals. Certain embodiments of the vegetable protein-based kibbles of the present disclosure may show reduction of malodorous components, such as short chain carboxylic acids, for example 3-methyl butanoic acid, butanoic acid, pentanoic acid and hexanoic acid, that may occur in certain common animal sourced protein. Further, meat protein sources may develop an oxidized fat aroma, typical of rancidity. Malodorous lipid oxidation compounds may include, for example, certain aldehydes, furans, alcohols and ketone oxidation products. Vegetable protein-based kibbles may have very little fat and the small amounts of fat in the vegetable protein kibble core may be a more stable pure fat (for example, in purified form, or with antioxidants, from a commercial source), thus such a kibble may be less prone to develop malodors associated with fat oxidation. Therefore, kibbles formed from a vegetable protein-based core matrix may demonstrate certain advantages, such as desirable aroma and longer viable shelf life, over animal sourced protein-based kibbles.

Vegetable based proteins have not been traditionally used exclusively as the protein component in animal feeds and pet foods. This may be particularly true for kibble-type animal feeds due to stability and formulation issues. Vegetable proteins, such as DDGS, CPC, CGM, SPI, and SPC are readily available from agricultural manufacturing and production and certain vegetable proteins, such as, for example, DDG and DDGS, CPC, CGM may be by-products of manufacturing operations such as ethanol production. Thus, vegetable based proteins may provide a readily available and inexpensive source of protein for animal feeds.

In specific embodiments, the kibble comprises from 25% to 99.99% by weight of the protein-based core matrix. In other embodiments, the kibble comprises from 50% to 99% by weight of the protein-based core matrix. Specific embodiments of the kibbles according to the present disclosure may include a protein-based core matrix that may further comprise one or more other ingredients, such as ingredients that may improve processing, stability, and/or palatability, or provide specific nutritional requirements. For example, the protein-based core matrix may further comprise at least one of corn syrup solids, minerals, vitamins, prebiotics (e.g., fructo-oligosaccharides, oligofructosaccharides, inulin, chicory, xylo-oligosaccharides, mannan-oligosaccharides, lactosucrose, galacto-oligosaccharides, or resistant starch), vegetable oils, animal fats, fish oils, mineral oils, amino acids, fibers, animal proteins, fish proteins, emulsifiers, processing aids, humectants, and dextrins.

In many applications, starch may be added to the protein component of the kibble feed to improve stability, such as by holding the components in the kibble form. In certain applications, it may be desirable to provide a kibble that is substantially free of starch. However, formulation of a kibble, such as a protein based kibble without starch is not straight forward since the kibble stability without starch is reduced. The inventors of the various embodiments of the present disclosure have developed methodologies to produce an extruded protein-based core matrix kibble that is substantially free of a matrix of gelatinized starch and where the kibble is greater than 70% by weight of a vegetable protein. Thus, one embodiment of the present disclosure provides a protein-based core matrix, wherein the protein-based core is substantially free of a gelatinized starch matrix. Specific embodiments may comprise a protein-based core that has less than 5%, 2%, 1 %, or even 0.5% by weight of gelatinized starch. Still other embodiments, the protein-based core matrix may be essentially free of gelatinized starch. As used herein, the term "essentially free" when used in reference to concentration of a specific component in a composition means less than a measurable amount using methods of concentration measurements common in the art.

Various embodiments of the present disclosure may further provide for an animal feed kibble comprising at least one coating comprising at least one additive. As described herein, when a coating is said to be on a surface of the core matrix, the coating may be either directly in contact with the protein-based core matrix or in contact with one or more other intermediate coatings on the protein-based core matrix (i.e., as a specific layer in a series of coating layers on the surface of the core matrix). In specific embodiments, the coating may comprise a fat in addition to the at least one additive.

In certain embodiments, the at least one coating may comprise at least one active coating on the surface of the protein-based core matrix. As used herein, the term "active" means a coating that comprises an active component, for example, but not limited to, components that may impart some desired benefit on the nutrition or health of the animal consuming the animal feed or may impart some desired aesthetic or palatability benefit to the animal feed. Examples of active components that may be incorporated or added into the active coatings include, but are not limited to, fructo-oligosaccharides (FOS), beet pulp, mannan-oligosaccharides (MOS), chicory, oat fiber, citrus pulp, carboxymethylcellulose (CMC), guar gum, gum arabic, apple pomace, citrus fiber, fiber extracts, fiber derivatives, dried beet fiber (sugar removed), celluloses, α-cellulose, galacto-oligosaccharides, xylo-oligosaccharides, oligo derivatives from starch, inulin, psyllium, pectins, citrus pectin, xanthan gum, alginates, gum talha, beta-glucans, chitins, lignin, non-starch polysaccharides, carrageenan, reduced starch,soy oligosaccharides, trehalose, raffinose, stachyose, lactulose, polydextrose, oligodextran, genti-oligosaccharide, pectic oligosaccharide, monosaccharides, disaccharides, hemicellulose, chicken meals, chicken, chicken by-product meals, lamb, lamb meals, turkey, turkey meals, beef, beef by-products, viscera, fish meal, enterals, kangaroo, white fish, venison, soybean meal, soy protein isolate, soy protein concentrate, corn gluten meal, corn protein concentrate, distillers dried grains solubles, cereals, grains, corn, wheat, rice, oats, corn grits, sorghum, grain sorghum, milo, wheat bran, oat bran, amaranth, durum, semolina, poultry fat, chicken fat, turkey fat, pork fat, lard, tallow, beef fat, vegetable oils, corn oil, soy oil, cottonseed oil, palm oil, palm kernel oil, linseed oil, canola oil, rapeseed oil, fish oil, menhaden oil, anchovy oil, olestra, sodium selenite, monosodium phosphate, calcium carbonate, potassium chloride, ferrous sulfate, zinc oxide, zinc chloride, manganese sulfate, copper sulfate, manganous oxide, potassium iodide, cobalt carbonate, potassium citrate, calcium carbonate, calcium chloride, sodium bisulfate, stannous chloride, stannous fluoride, sodium fluoride, choline chloride, vitamin E supplement, ascorbic acid, vitamin A acetate, calcium pantothenate, pantothenic acid, biotin, thiamine mononitrate (source of vitamin B1), vitamin B12 supplement, niacin, riboflavin supplement (source of vitamin B2), inositol, pyridoxine hydrochloride (source of vitamin B6), vitamin D3 supplement, folic acid, vitamin C, beef broth, brewers dried yeast, egg, egg product, flax meal, DL methionine, amino acids, cystine, 1-tryptophan, taurine, carnosine, alanine, cysteine, arginine, methionine, tryptophan, lysine, asparagine, aspartic acid, phenylalanine, valine, threonine, isoleucine, histidine, leucine, glycine, glutamine, tyrosine, homocysteine, ornithine, citruline, glutamic acid, proline, serine, polyphosphates, sodium hexametaphosphate (SHMP), sodium pyrophosphate, sodium tripolyphosphate, copper gluconate, triclosan, glucosamine hydrochloride, chondroitin sulfate, green lipped mussel, blue lipped mussel, methyl sulfonyl methane (MSM), boron, boric acid, phytoestrogens, phytoandrogens, genistein, diadzein, L-carnitine, chromium picolinate, chromium tripicolinate, chromium nicotinate, glucose anti-metabolites, 2-deoxy-D-glucose, 5-thio-D-glucose, 3-O-methylglucose, anhydrosugar alcohols, 1,5-anhydro-D-glucitol, 2,5-anhydro-D-glucitol, 2,5-anhydro-D-mannitol, mannoheptulose, avocado extract comprising mannoheptulose, acid/base modifiers, eucalyptus, lavender, peppermint, tea extract, rosemary extract, rosemarinic acid, coffee extract, caffeic acid, turmeric extract, blueberry extract, grape extract, grapeseed extract, soy extract, lutein, astaxanthin, zeaxanthin, bixin, lycopene, beta-carotene, tocopherols (vitamin E), vitamin C, vitamin A, plant-derived materials, carotenoids, selenium, co-enzyme Q10, arachidonic acid, alpha-linoleic acid, gamma linolenic acid, linoleic acid, eicosapentanoic acid (EPA), docosahexanoic acid (DHA), fish oils enriched in omega-3 fatty acids, plasticizers, colorants, flavorants, sweeteners, buffering agents, slip aids, carriers, pH adjusting agents, natural ingredients, stabilizers, biological additives, enzymes, proteases, lipases, chemical additives, coolants, chelants, denaturants, drug astringents, emulsifiers, external analgesics, fragrance compounds, humectants, opacifying agents, zinc oxide, titanium dioxide, anti-foaming agents, silicone, preservatives, butylated hydroxytoluene (BHT), butylated hydroxyanisole (BHA), propyl gallate, benzalkonium chloride, EDTA, benzyl alcohol, potassium sorbate, parabens, reducing agents, solvents, hydrotropes, solublizing agents, non-surfactant suspending agents, solvents, aqueous and non-aqueous viscosity increasing agents, sequestrants, keratolytics, natural colorants, synthetic colorants, and combinations of any thereof.

Other embodiments of the present disclosure may comprise animal feed kibbles wherein the at least one coating may comprise at least one biological coating on the surface of the protein-based core matrix. Suitable biologics include, for example, but not limited to enzymes, antibodies, immunoglobulins, cytokines, epigenetic agents, and probiotic microorganisms and materials. In specific embodiments, the biological coating may comprise at least one probiotic enriched coating. The probiotic enriched coating may comprise a biologic or probiotic selected from the group consisting of a probiotic component having a probiotic microorganism count of at least 10⁵ CFU/gram of the coating, yeast, enzymes, antibodies, immunoglobulins, cytokines, epigenetic agents, and combinations thereof. In other embodiments, the probiotic may be measured in referenced to the weight of the kibble. According to these embodiments, the probiotic component may have a probiotic microorganism count of at least 10⁴ CFU/gram of the kibble.

The probiotic-enriched coating according to specific embodiments may comprise one or more bacterial probiotic microorganism suitable for pet consumption and effective for improving the microbial balance in the pet gastrointestinal tract or for other benefits, such as disease or condition relief or prophylaxis, to the pet. Various probiotic microorganisms known in the art are suitable for use in the present invention. See, for example, WO 03/075676, and U.S. Published Application No. US 2006/0228448A1. In specific embodiments, the probiotic component may be selected from bacteria, yeast or microorganism of the genera *Bacillus*, *Bacteroides*, *Bifidobacterium*, *Enterococcus* (e.g., *Enterococcus faecium* DSM 10663 and *Enterococcus faecium* SF68), *Lactobacillus*, *Leuconostroc*, *Saccharomyces*, *Candida*, *Streptococcus*, and mixtures of any thereof. In other embodiments, the probiotic may be selected from the genera *Bifidobacterium*, *Lactobacillus*, and combinations thereof. Those of the genera *Bacillus* may form spores. In other embodiments, the probiotic does not form a spore. Non-limiting examples of lactic acid bacteria suitable for use herein include strains of *Streptococcus lactis*, *Streptococcus cremoris*, *Streptococcus diacetylactis, Streptococcus thermophi*/*us*, *Lactobacillius bulgaricus*, *Lactobacillus acidophilus (e.g*., *Lactobacillus acidophilus* strain DSM 13241*)*, *Lactobacillus helveticus*, *Lactobacillus bifidus*, *Lactobacillus casei*, *Lactobacillus lactis*, *Lactobacillus plantarum*, *Lactobacillus rhamnosus*, *Lactobacillus delbrukii, Lactobacillus thermophilus*, *Lactobacillus fermentii*, *Lactobacillus sa*/*varius, Lactobacillus reuteri*, *Bifidobacterium* /*ongum*, *Bifidobacterium infantis*, *Bifidobacterium bifidum*, *Bifidobacterium animalis*, *Bifidobacterium pseudolongum*, and *Pediococcus cerevisiae*, or mixtures of any thereof. In specific embodiments, the probiotic-enriched coating may comprise the bacterial strain *Bifidobacterium animalis* AHC7 NCIMB 41199. Other embodiments of the probiotic-enriched coating may include one or more microorganisms identified in U.S. Published Application Nos. US 2005/0152884A1, US 2005/0158294A1, US 2005/0158293A1, US 2005/0175598A1, US 2006/0269534A1 and US 2006/0270020A1 and in PCT International Publication No. WO 2005/060707A2.

In certain embodiments, the probiotic-enriched coating may have a viable probiotic microorganism count of at least about 10⁴ colony forming units (CFU) per gram of the kibble, or at least about 10⁵ CFU per gram of kibble, or at least about 10⁷ CFU per gram of kibble. For example, the coating may have a viable probiotic microorganism count of up to about 10¹¹ CFU per gram of kibble, or up to about 10⁹ CFU per gram of kibble, or up to about 10⁸ CFU per gram of kibble. Enumeration as defined by CFU is determined using methods such as disclosed in U.S. Publication No. US 2006/0228448A1. Advantageously, the probiotic enriched coatings provided herein having a shelf life of at least about three months, alternatively at least about six months, alternatively from about three months to about twenty-four months, alternatively from about six months to about eighteen months. In specific embodiments, the probiotic enriched coatings may have a shelf life of at least 16 months. As used herein, the term "shelf life" refers to that property of the second component whereby 1% or more, alternatively 5% or more, alternatively 10% or more, alternatively 25% or more, alternatively 50% or more, alternatively 75% or more, of the probiotic microorganisms of the probiotic-enriched coating are viable at the referenced time period after exposure to ambient environmental conditions.

In specific embodiments, the probiotic-enriched coating may comprise a yeast. Any of a variety of yeast may be utilized, and will be well-known in the art, such as those of the *Saccharomyces* genera (including, for example, *Saccharomyces cervisiae* (sometimes referred to as "Baker's yeast"), and *Candida utilis* (which may also be referred to as *Torulopsis utilis*). As used herein, yeast includes but is not limited to those incorporating one or more components incorporated from the environmental media upon which it is cultivated, such as mineral-enriched yeast. Various fermentation processes are well-known in the art.

In other embodiments, the probiotic-enriched coating may comprise one or more enzymes. Enzymes particularly include those having beneficial biological activity in a pet, such as digestive or other therapeutic enzymes. Non-limiting examples include proteases, collagenases, lipases, amylases, cellulases, lysozymes, candidases, lactases, kinases, invertases, galactosidases, pectinases, ribonucleases (including deoxyribonucleases) and combinations thereof.

In other embodiments, the probiotic-enriched coating may comprise one or more antibodies. Antibodies to viruses, pathogenic bacteria, parasites, or the like may be used in the coatings herein. Non-limiting examples include antibodies to feline rhinotracheitis, feline panleukopenia, feline calicivirus, feline pneumonitis, feline leukemia, canine distemper, canine parvovirus, coronavirus, *Borrelia burgdorferi* (Lyme Disease), *Toxoplasma gondii*, *E. coli*, campylobacter, *salmonella, clostridia*, bacteriodes, giardia, tapeworm, roundworm, coccidian, cryptosporidium, and combinations thereof.

In certain embodiments, the probiotic-enriched coating may comprise one or more immunoglobulins. Non-limiting examples include immunoglobulin A (IgA), immunoglobulin M (IgM), immunoglobulin G (IgG), and combinations thereof. In other embodiments, the probiotic-enriched coating may comprise one or more cytokines. Non-limiting examples include transforming growth factor beta (TGF-beta), tumor necrosis factor alpha (TNF-alpha), interleukin-4, interleukin-10, interleukin-12, and combinations thereof.

The probiotic-enriched coating may also comprise a prebiotic. "Prebiotic" includes substances or compounds that are fermented by the intestinal flora of the pet and hence promote the growth or development of lactic acid bacteria in the gastro-intestinal tract of the pet at the expense of pathogenic bacteria. The result of this fermentation may include a release of fatty acids, in particular short-chain fatty acids in the colon. This may have the effect of reducing the pH value in the colon. Non-limiting examples of suitable prebiotics include oligosaccharides, such as inulin and its hydrolysis products, oligofructose, fructo-oligosaccharides, galacto-oligosaccharides, xylo-oligosaccharides or oligo derivatives of starch. The prebiotics may be provided in any suitable form. For example, the prebiotic may be provided in the form of plant material which contains the fiber. Suitable plant materials include asparagus, artichokes, onions, wheat or chicory, or residues of these plant materials. Alternatively, the prebiotic fiber may be provided as an inulin extract, for example extracts from chicory are suitable. Suitable inulin extracts may be obtained from Orafti SA of Tirlemont 3300, Belgium under the trade mark RAFTILINE. Alternatively, the fiber may be in the form of a fructo-oligosaccharide such as obtained from Orafti SA of Tirlemont 3300, Belgium under the trade mark RAFTILOSE. Otherwise, the fructo-oligosaccharides may be obtained by hydrolyzing inulin, by enzymatic methods, or by using micro-organisms.

In specific embodiments, the animal feed kibble of the present disclosure may comprise from 0.01% to 75% by weight of the probiotic-enriched coating. In other embodiments, the kibble may comprise from 0.3% to 50% or from 0.4% to 25% by weight of the probiotic-enriched coating. The amount of probiotic-enriched coating used in a particular embodiment of the animal feed kibble may depend on a variety of factors, such as, but not limited to, probiotic type(s), animal diet, animal nutritional needs, and/or formulation of the animal feed. For example, in certain embodiments, the animal feed or animal diet may comprise primarily the kibbles according to present disclosure. In such a case, the kibble may comprise lower percent (by weight) concentrations of the probiotic enriched coating. In other embodiments, the animal feed or diet may comprise one or more other ingredients. For example, the present disclosure contemplates an animal feed comprising two or more kibble-type ingredients, including an active kibble having a vegetable protein-based core matrix that is substantially free of gelatinized starch and at least one probiotic enriched coating (as described in detail herein), and one or more traditional kibbles. In such a case, the active kibble may comprise a higher percent (by weight) concentration of the probiotic-enriched coating. The concentration of the probiotic coating included on the kibble may be readily determined from the amount of probiotic (or other active ingredient) that is desired to be administered to the animal.

Coating materials for use in the active coatings, such as a probiotic-enriched coating, described herein may demonstrate characteristics and features, such as, providing stability (as described in detail herein) to the active ingredient(s) in the coating. Further, as described herein, when the coating is a probiotic-enriched coating, the coating may also be formulated to ensure sufficient amount of the probiotic microorganisms are released in the digestive system of the animal (i.e., the probiotics become bioactive). Suitable coating compositions for use in the various embodiments of the kibble with a protein based core and an active coating include, but are not limited to, cocoa butter, palm kernel oil, palm oil, cottonseed oil, soybean oil, canola oil, rapeseed oil, peanut oil, butter oil, hydrogenated and partially hydrogenated derivatives of oils and fats (including those listed herein), wax, paraffin, paraffin wax, paraffin oil, liquid paraffin, solid paraffin, candelilla wax, carnauba wax, microcrystalline wax, beeswax, long chain fatty acids and esters thereof, capric acid, myristic acid, palmitic acid, stearic acid, oleic acid, lauric acid, behenic acid, adipic acid, acetyl acyl glycerols, acetylated monoglyceride, shellac, dewaxed gumlac, triolein, chocolate, chocolate liquor, sweet milk chocolate, cocoa solids, methylcellulose, carboxymethylcellulose, hydroxypropylmethylcellulose, glycerol monostearate, polyethylene glycol, pectin, wheat gluten, soy lecithin, sodium caseinate, whey protein isolate, whey protein concentrate, stearyl alcohol, cetyl alcohol, behenyl alcohol, olestra, tristearin, animal fat, poultry fat, and mixtures of any thereof. In other embodiments, the at least one additional coating may comprise one or more partially hydrogenated plant oils or plant oils high in saturated fats (i.e., plant oil that is substantially solid at room temperature). For example, the at least one additional coating may comprise a coating comprising partially hydrogenated plant oil on at least a portion of a surface of the active coating or a coating on at least a portion of a surface of one or more intermediate coatings on the surface of the active coating. A coating comprising partially hydrogenated plant oil may assist in the stability of the kibble and the probiotic, thereby increasing shelf life of the animal feed. For example, partially hydrogenated plant oil, such as soybean oil, corn oil, cottonseed oil, cocoa butter, palm kernel oil, palm oil, canola oil, rapeseed oil, peanut oil, butter oil, and the like (including oil mixtures), may prevent transmission of water, oxidation or other degradation processes. Suitable examples of higher melting point temperature components which may be used as a coating agent include, but are not limited to, waxes such as, but not limited to, candelilla wax, carnauba wax, microcrystalline wax, and bees wax; fatty acids and esters thereof such as, but not limited to, capric acid, lauric acid, myristic acid, palmitic acid, stearic acid, oleic acid, and behenic acid; hydrogenated oils and fats, such as, but not limited to, hydrogenated soybean oil, hydrogenated cottonseed oil, hydrogenated palm oil, hydrogenated peanut oil, hydrogenated rapeseed oil, hydrogenated corn oil, hydrogenated poultry fat, hydrogenated tallow, hydrogenated lard, and hydrogenated fish oil; partial glycerides of hydrogenated fats and oils, such as, but not limited to all those listed herein; fatty alcohols, such as, but not limited to, cetyl alcohol, stearyl alcohol, and behenyl alcohol; and combinations of any thereof. In certain embodiments, the partially hydrogenated plant oil or other coating composition disclosed herein may have a melting point ranging from 25°C to 70°C, or in certain embodiments ranging from 45°C to 70°C. In certain embodiments, the kibble may comprise from 0.01% to 20% by weight of the coating comprising partially hydrogenated plant oil or one of the other coating compositions disclosed herein.

Various other embodiments of the animal feed kibbles described herein may further comprise at least one additional coating. For example, the at least one additional coatings may include one or more coatings containing additional active ingredients (including those described herein) or one or more probiotic-enriched coatings. In other embodiments, the one or more additional coatings may comprise only the coating material, wherein the one or more additional coating may increase the stability of the food composition.

Specific embodiments of the present disclosure provide for an animal feed kibble comprising a protein-based core matrix that is greater than 70% by weight of a vegetable protein, wherein the protein-based core is substantially free of a matrix of gelatinized starch; and at least one active coating on at least a portion of a surface of the protein-based core matrix. Examples of vegetable proteins suitable are described herein. In certain embodiments, the at least one active coating comprises at least one probiotic-enriched coating, such as a coating enriched in one or more probiotic microorganisms described herein.

In certain embodiments, the animal feed kibbles of the various embodiments described herein include a kibble comprising from 25% to 99.99% by weight of protein-based core matrix and comprising from 0.01% to 75% by weight of at least one active coating. Other embodiments of the animal feed kibbles may comprise from 50% to 99.7% by weight of the protein-based core matrix and 0.3% to 50% by weight of the at least one active coating. Still further embodiments of the animal feed kibbles may comprise from 75% to 99.6% by weight of the protein-based core matrix and 0.4% to 25% by weight of the at least one active coating. The animal feed kibbles according to these embodiments may additionally comprise at least one additional coating, for example, a coating comprising a partially hydrogenated plant oil, on at least a portion of a surface of the active coating (or on one or more intermediate coatings on the active coating), as described herein.

Further embodiments of the present disclosure provide methods of forming an animal feed kibble, such as the various embodiments of the animal feed kibbles described in detail herein. According to specific embodiments, the method may comprise extruding a protein-based core matrix, as described herein, such as a protein-based core matrix that is greater than 70% by weight of a vegetable protein, and wherein the protein-based core is substantially free of a matrix of gelatinized starch and coating at least a portion of a surface of the protein-based core matrix with a coating, such as a coating comprising an active ingredient, including a probiotic-enriched coating. In other embodiments, the method may further comprise coating at least a portion of a surface of the probiotic coating with a second coating or layer. The second coating layer may comprise at least one partially hydrogenated plant oil.

In specific embodiments, the extruding of the core matrix may be done using a single screw extruder, while other embodiments may be done using a twin-screw extruder. Extrusion of the core-matrix comprising greater than 70% by weight of a vegetable protein, such as DDG, DDGS, CPC, CGM, SPI, WG, SorgPC, OPC, RPC, and/or SPC, may require specific configurations of the extruder to produce a material suitable for a kibble-type animal feed. For example, very high shears and low extrusion times may be necessary to prevent significant color degradation and prevent polymerization of the material within the extruder and to produce kibbles that are durable for further processing, such as coating with one or more coatings.

Further embodiments of the present disclosure provide kibble-type animal or pet foods. The kibble-type animal food or pet food may comprise kibbles according to any of the embodiments described herein. For example, according to one embodiment, the kibble-type animal food may comprise an animal feed kibble comprising a vegetable protein-based core matrix that is substantially free of a matrix of gelatinized starch, wherein the vegetable protein-based core matrix kibble comprises up to 100% of the total kibbles in the animal food. In certain embodiments, the vegetable protein-based core matrix kibble may comprise from 70% to 100%, in some embodiments from 80% to 100%, or even 90% to 100% of the total kibbles in the animal food.

In another embodiment, the present disclosure provides a kibble-type pet food comprising a first kibble comprising a source of protein of from 16% to 50% by weight of the first kibble, a source of fat of from 5% to 35% by weight of the first kibble and a source of carbohydrate; and a second kibble comprising a protein-based core matrix that is substantially free of a matrix of gelatinized starch, such as any of the protein-based core matrix kibbles described herein.

According to these embodiments, the first kibble may be a kibble that can provide protein, fat and carbohydrate necessary for a diet to maintain good nutrition by the animal. In certain embodiments, the first kibble may comprise a source of protein ranging from 0% up to 50% by weight of the first kibble. In other embodiments, the source of protein may range from 16% to 50% by weight, or even 20% to 50% by weight of the first kibble. It will be recognized by one of skill in the art that many kibble formulations may be used in the first kibble to provide the desired amount of additional protein, fat and carbohydrates. In addition, the first kibble may comprise additional ingredients, such as vitamins, minerals, colorants, flavorants, and the like.

In certain embodiments, the second kibble may comprise up to 90% of the kibbles in the pet food. For example, the second kibble may comprise from 2% to 90% of the kibbles, or from 2% to 50% of the kibbles, or even from 2% to 25% of the kibbles in the pet food. Alternatively, the kibbles may be present in specific ratios of the first kibble and the second kibble. For example in the pet food compositions of the present disclosure, the first kibble and the second kibble may be present at a ratio of at least 2:1, or at least 5:1, or at least 10:1, all by weight. In another embodiment of the disclosure, the first kibble and the second kibble may be present at a ratio of from 2:1 to 50:1, or from 5:1 to 25:1, or from 10:1 to 20:1, all by weight.

In various embodiments, the second kibble may further comprise at least one active coating on at least a portion of a surface of the protein-based core matrix. For example, the at least one active coating may comprise any of the active coatings described herein. In one embodiment, the active coating may comprise a fat containing an additive, such as the fats and additives described herein. In a specific embodiment the at least one active coating may be a probiotic-enriched coating. Examples of probiotic-enriched coatings are described in detail herein.

The pet food composition may be comprised of physically distinct components (i.e., the first kibble and the second kibble). The pet food may be provided as a variety of different presentations of the first kibble and the second kibble. For example, the pet food composition may be provided as a heterogeneous mixture of the first kibble and the second kibble. Alternatively, the first kibble and the second kibble may be provided as discretely packaged components, which may be combined in any manner or amount desired at the time of feeding. To illustrate, the pet food composition may comprise a first containing device and a second containing device, wherein the first containing device contains at least a portion of the first component and the second containing device contains at least a portion of the second component; for example, the first containing device may be a bag whereas the second containing device may be a canister. For convenience of the consumer, the bag containing at least a portion of the first component may also contain the canister containing at least a portion of the second component. Any of a variety of other presentations will be well-understood by those of ordinary skill in the art.

The pet food compositions or components thereof, may or may not be nutritionally balanced. As used herein, the term "nutritionally balanced," with reference to the pet food composition or a component thereof, means that the composition or component has known required nutrients to sustain life in proper amounts and proportion based on recommendations of recognized authorities in the field of pet nutrition, except for the additional need for water.

The first kibble of the pet food compositions of the present disclosure comprises a source of protein, a source of fat and a source of carbohydrate. Examples of a first kibble include traditional pet food kibbles. The first kibble itself may be, or may not be, nutritionally balanced. In one embodiment, the first component is nutritionally balanced.

In one embodiment, the first kibble may comprise, on a dry matter basis, from 20% to 50% crude protein, or from 22% to 40% crude protein, by weight of the first kibble. The crude protein material may comprise any material having a protein content of at least 15% by weight, non-limiting examples of which include vegetable proteins such as soybean, cottonseed, and peanut, animal proteins such as casein, albumin, and meat tissue. Non-limiting examples of meat tissue useful herein include fresh meat, and dried or rendered meals such as fish meal, poultry meal, meat meal, bone meal, and the like. Other types of suitable crude protein sources include wheat gluten or corn gluten, and proteins extracted from microbial sources such as yeast.

The first kibble comprises a source of fat. In one embodiment, the first kibble may comprise, on a dry matter basis, from 5% to 35% fat, preferably from 10% to 30% fat, by weight of the first component. Sources of fat are widely known, including any component comprising a source of fat, defined herein to be inclusive of, for example, wax, fat, fatty acid, and lipid. Specific examples of wax, fat, fatty acid, or lipid may often be interchangeable in accordance with nomenclature common in the art; for example, a lipid may often also be characterized as a fat. The inventors herein do not intend to be limited by any particular designation of nomenclature, and classifications of a particular material as a wax, fat, fatty acid, lipid, or the like is made for purposes of convenience only.

For example, the lipid component may comprise a fat which is a cocoa butter component or a plant oil or partially hydrogenated plant oil. Alternatively or additionally, the lipid component may comprise an animal-derived fat component. As will be commonly known in the art, the animal-derived fat component comprises a fat derived from an animal. Non-limiting examples include beef, poultry, pork, and lamb (e.g., lards and tallows). Dairy fats may also be examples, including milkfat, fractionated milkfat, and butterfat Alternatively or additionally, the lipid component may comprise a fatty acid. Illustrative sources include omega-3 or omega-6 fatty acids. Other examples of suitable fatty acids may include oleic acid, stearic acid, palmitic acid, and lauric acids, including suitable salts thereof. Even further examples of suitable fatty acids include esters or other derivatives thereof, such as cetyl palmitate, acetic, lactic, or citric mono- and di-glyceride fatty acids, isopropyl palmitate, isopropylmyristate, and mono-, di-, and triglycerides (some of which may also be characterized as fats). Alternatively or additionally, the compositions may comprise wax. For example, illustrative waxes include paraffin wax, beeswax (e.g., white or yellow), carnuba wax, candellila wax, microcrystalline wax, rice bran wax, cetyl ester wax, and emulsifying wax.

Grains or cereals such as rice, corn, milo, sorghum, barley, alfalfa, wheat, and the like are illustrative sources of carbohydrate. These carbohydrate sources, and typical levels thereof, are widely known in traditional pet food compositions.

The present compositions, such as those comprising an active coating, such as but not limited to, an enriched coating, may be used to deliver benefit following oral consumption in animals, such as a pet. This benefit generally maintains and improves the overall health of the animal. Non-limiting elements of animal health and physiology that benefit, either in therapeutically relieving the symptoms of, or disease prevention by prophylaxis, or improvement of overall health, including treatment of the immune system, treatment of the gastrointestinal system, treatment of skin or coat, treatment of stress, and combinations thereof. Non-limiting examples include inflammatory disorders, immunodeficiency, inflammatory bowel disease, irritable bowel syndrome, cancer (particularly those of the gastrointestinal and immune systems), otitis externa, diarrheal disease, antibiotic associated diarrhea, appendicitis, autoimmune disorders, multiple sclerosis, Alzheimer's disease, amyloidosis, rheumatoid arthritis, arthritis, joint mobility, hip dysplasia, diabetes mellitus, insulin resistance, bacterial infections, viral infections, fungal infections, periodontal disease, urogenital disease, idiopathic cystitis, interstitial cystitis, surgical associated trauma, surgical-induced metastatic disease, sepsis, weight loss, weight gain, excessive adipose tissue accumulation, anorexia, fever control, cachexia, wound healing, ulcers, gut barrier infection, allergy, asthma, respiratory disorders, circulatory disorders, coronary heart disease, anemia, disorders of the blood coagulation system, renal disease, disorders of the central nervous system, hepatic disease, ischemia, nutritional disorders, treatment or prevention of disorders involving the hypothalamus-pituitary-adrenal (HPA) axis, osteoporosis, endocrine disorders, and epidermal disorders. Preferred are treatment of the gastrointestinal tract, including treatment or prevention of diarrhea; immune system regulation, preferably the treatment or prevention of autoimmune disease and inflammation, maintaining or improving the health of the skin and/or coat system, preferably treating or preventing atopic disease of the skin (e.g., dermatitis or eczema), treatment or prevention of disorders involving the hypothalamus-pituitary-adrenal (HPA) axis, ameliorating or reducing the effects of aging, including mental awareness and activity levels, and preventing weight loss during and following infection. Treatment of the various disorders described herein may be measured using techniques known to those of ordinary skill in the art, for example, those methods of measurement disclosed in U.S. Published Application No. US 2006/0228448A1.

### Probiotic Stability and Bioactivity

Producing an animal feed kibble comprising an active coating comprising one or more probiotics (i.e., a problotic-enriched coating) may present specific formulation issues and difficulties. For example, when producing a kibble, such as a kibble with the probiotic-enriched coating, the coated kibble and the resulting animal feed must have sufficient shelf life so that the microorganisms of the probiotic-enriched coating retain their activity upon sale to a consumer and consumption by an animal. Stability of the probiotic coating is therefore necessary from a consumer satisfaction standpoint and also from a regulatory standpoint. For example, the probiotics in the coating must have sufficient stability such that they do not lose a noticeable amount of their probiotic activity, for example, by the probiotic microorganisms dying, between the time of formulation in the production facility and the time of consumption by the animal. If consumers do not notice or believe that the probiotics in the coatings are providing a benefit, then they will not purchase the product. In addition, certain governmental regulatory agencies require at least a certain amount of the probiotics to be active if a product is labeled, guaranteed, or advertised as containing probiotics and providing certain probiotic produced health benefits. For at least these two reasons, probiotics in food compositions must demonstrate acceptable stability.

In certain embodiments, the animal feed kibbles with the vegetable protein-based core matrix and at least one probiotic enriched coating of the present disclosure may have a stability of at least 24 months or more. In specific embodiments, the probiotics of the animal feed kibbles may have a stability of at least 20 months. In still other embodiments, the probiotics of the animal feed kibbles may have a stability of at least 16 months. As used herein, the terms "stability" and "stable" mean that over the specified time, the active (or dominant but able to become active) probiotic microorganisms are within two logs of the original actual level of probiotics in the probiotic enriched coating of the animal feed (e.g., if the actual level of probiotics immediately after making the food is 5 x 10⁷ colony forming units (CFU)/gram of the animal feed then the probiotic and food are stable if the level of probiotics measured after are a period of time are 5 x 10⁵ CFU/gram of the animal feed or higher). Thus, the animal feeds comprising one or more probiotic-enriched coating as detailed in the present disclosure must be formulated with ingredients and production methodology that ensures that the probiotic microorganisms in the animal feed have a sufficient stability.

For stable probiotics, the probiotic microorganisms must be maintained in a dormant state until consumed by the animal. Stability of the probiotics in the probiotic enriched coating may depend, at least in part, on the ability of the coating material to prevent or reduce water transmission. For example, water is an enabler of bacterial or microorganism growth. Thus, if the coating material(s) surrounding the probiotic microorganisms does not prevent transmission of water, for example, from humidity or other sources, the probiotic microorganisms may be exposed to water which may then cause the probiotic microorganisms to come out of dormancy and begin growing. This presents a concern, since the probiotic microorganisms will only grow for a short period of time before they consume their available food supply and die. Death of the probiotic microorganism results in a reduction of the activity of the probiotic and reduction of the overall activity of the probiotic animal feed composition. Thus, the probiotic enriched coating and/or any coating(s) on the surface of the probiotic coating must have a sufficiently low water transmission character to prevent premature activation and growth of the probiotic microorganism prior to consumption by the animal.

In addition to the stability issues described herein, another concern when formulating an animal feed kibble comprising a protein-based core matrix and at least one probiotic coating is the bioactivity of the probiotic microorganisms. This may also be a concern with coatings containing other additives and biologics. That is, the animal feed kibble must be able to effectively deliver sufficient amount of the probiotic microorganisms (or other additives and biologics) to the digestive system of the animal upon consumption of the animal feed kibble. Biologics may include, but are not limited to, enzymes, antibodies, immunuglobulins, and the like. This particular issue may sometimes conflict with the goal of producing an animal feed kibble with a stable probiotic-enriched coating, as discussed herein. For example, production of an animal feed kibble with a highly stable probiotic enriched coating (i.e., one where the probiotic organisms remain viable over an extended period time) may result in lowered bioactivity of the probiotic microorganism, for example, when the coating material provides too much protection to the probiotic microorganisms and prevents the probiotic from dispersing into the target area (for example, the small intestine or large intestine) during the digestion process. Certain conventional coating materials may provide stability to the coated or encased probiotic microorganism but not provide sufficient bioactivity of the probiotic microorganism in the digestive tract of the animal. Alternatively, other coatings materials may provide acceptable bioactivity levels but will not provide the necessary stability to the food composition comprising the probiotic.

Thus, according to various embodiments, the present disclosure provides a coating or coating matrix suitable for use with a probiotic material or microorganism or other biologic that may be used to coat at least a portion of an animal feed kibble, for example, but not limited to, the vegetable protein-based core matrix compositions described herein. The coating materials described herein may be used as a matrix for one or more probiotic materials or microorganisms to form a probiotic enriched coating on a core matrix. Alternatively, or in addition, the coating materials described herein may be used to form one or more additional coatings on an outer surface of a probiotic enriched coating. In other embodiments, the coating materials described herein may be used as a coating between a core matrix and a probiotic enriched coating, for example to prevent moisture transmission from the core matrix to the probiotic enriched coating. Coatings comprising biologics may also be coated with these materials. The coating materials according to these embodiments provide probiotic-enriched coatings that provide both sufficient stability and bioactivity of the probiotics. For example, as discussed herein, the coatings may provide a stability of at least 24 months, or more for probiotics in the coating material. In other embodiments the coatings may provide stabilities of at least 20 months or more, or even at least 16 months or more. In still other embodiments, even shorter stability durations may be provided, such as stabilities of at least 12 months, or even at least 8 months. In addition to the stability, the coating materials may also provide sufficient bioactivity such that the probiotic microorganisms and materials are released in the gut and become bioactive, thereby providing the desired health benefit.

Examples of coating materials for the various embodiments herein include materials that provide sufficient hydrophobicity to prevent the transmission of significant amounts of water while still allowing the probiotic or other biologics contained within the coating to become bioactive. Suitable coating materials and compositions include, but are not limited to, cocoa butter, palm kernel oil, palm oil, cottonseed oil, soybean oil, canola oil, rapeseed oil, peanut oil, butter oil, hydrogenated and partially hydrogenated derivatives of oils and fats (including those listed herein), wax, paraffin, paraffin wax, paraffin oil, liquid paraffin, solid paraffin, candelilla wax, carnauba wax, microcrystalline wax, beeswax, long chain fatty acids and esters thereof, capric acid, myristic acid, palmitic acid, stearic acid, oleic acid, lauric acid, behenic acid, adipic acid, acetyl acyl glycerols, acetylated monoglyceride, shellac, dewaxed gumlac, triolein, chocolate, chocolate liquor, sweet milk chocolate, cocoa solids, methylcellulose, carboxymethylcellulose, hydroxypropylmethylcellulose, glycerol monostearate, polyethylene glycol, pectin, wheat gluten, soy lecithin, sodium caseinate, whey protein isolate, whey protein concentrate, stearyl alcohol, cetyl alcohol, behenyl alcohol, olestra, tristearin, animal fat, poultry fat, and mixtures or blends of any thereof. In other embodiments, the coating materials or compositions may comprise a partially hydrogenated plant oil or a plant oil high in saturated fats (i.e., a plant oil that is substantially solid at room temperature), including blends of these plant oils. For example, the coating materials may comprise a partially hydrogenated plant oil, such as partially hydrogenated soybean oil, corn oil, cottonseed oil, cocoa butter, palm kernel oil, palm oil, canola oil, rapeseed oil, peanut oil, butter oil, and the like (including oil mixtures and blends), may prevent transmission of water, thereby providing acceptable stability while allowing acceptable levels of bioactivities. Suitable examples of other higher melting point temperature components which may also be used as a coating composition include, but are not limited to, waxes such as, but not limited to, candelilla wax, carnauba wax, microcrystalline wax, and bees wax; fatty acids and esters thereof such as, but not limited to, capric acid, lauric acid, myristic acid, palmitic acid, stearic acid, oleic acid, and behenic acid; hydrogenated oils and fats, such as, but not limited to, hydrogenated soybean oil, hydrogenated cottonseed oil, hydrogenated palm oil, hydrogenated peanut oil, hydrogenated rapeseed oil, hydrogenated corn oil, hydrogenated poultry fat, hydrogenated tallow, hydrogenated lard, and hydrogenated fish oil; partial glycerides of hydrogenated fats and oils, such as, but not limited to all those listed herein; fatty alcohols, such as, but not limited to, cetyl alcohol, stearyl alcohol, and behenyl alcohol; and combinations of any thereof. According to one specific embodiment, the present disclosure provides for a coating comprising a paraffin wax, a partially hydrogenated vegetable oil (for example, a partially hydrogenated cottonseed and soybean oil blend, such as, but not limited to K.L.X. or a partially hydrogenated palm kernel oil, such as, but not limited to Paramount B, both of which are commercially available from Loders Croklaan NA, Channahon, IL), and blends of paraffin wax and the partially hydrogenated vegetable oil.

According to certain embodiments, the amount of coating material utilized in the probiotic enriched coating may affect both the stability and bioactivity. For example, when a greater amount of coating material is used, the resistance of the coating to the transmission of water is also generally increased. However, when the amount of coating material is increased, the bioactivity of the probiotic may decrease, since more coating must be removed or digested for the probiotic to be released and become bioactive in the gut of the animal. According to certain embodiments, the amount of coating material in the probiotic enriched coating may range from 0.01% to 75% by weight of the total weight of the kibble. In other embodiments, the amount of coating material in the probiotic enriched coating may range from 0.1% to 30% by weight of the total weight of the kibble, or even 0.1 to 3% by weight of the total weight of the kibble. the food compositions is then assessed for its ability to deliver a bioactive probiotic (340), for example by quantifying the amount of surrogate marker measured in the test sample. If the probiotic delivery composition is assessed as a weak candidate, the trial is stopped to develop a new probiotic delivery composition (300). If the probiotic delivery composition is assessed as a good candidate, the trial is continued (350), and additional test samples from the test subject are analyzed for one or more of blood cytokines, fecal bacteria populations, stool consistency, fecal lactate, fecal short-chain fatty acids, and blood immunoglobulins until the end of the trial.

In specific embodiments of the test methods disclosed herein, the methods may include methods for assessing bioactivity of a probiotic in an animal food composition, such as a companion animal food composition, for example a dog food composition or a cat food composition. In specific embodiments, the food composition may be a companion animal food composition comprising a kibble type animal feed having a probiotic-enriched coating. Examples of kibble type animal feeds with probiotic-enriched coatings include, but are not limited to the vegetable protein-based kibbles with at least one probiotic coating according to any of the embodiments discussed herein.

### EXAMPLES

### Example 1

In this Example, one embodiment of a vegetable protein-based core matrix comprising a dry kibble food particle having a size, density, and shape suitable for coating and addition to a typical dry and/or soft moist pet food is produced.

The composition of the vegetable protein-based core matrix is set forth in Table 1. Dry food particles having a size, density, and shape for coating and addition to a typical dry and/or soft moist pet food are produced from the dry ingredients in Table 1 by the following process. The dry ingredients are added to a 1000 kg batch mixer and mixed sufficiently to make a homogenous blend. The liquid ingredients are combined with the dry ingredients in a continuous mixer Model DDC16 from Wenger Manufacturing, Inc. (Sabetha, KS). Liquid ingredients are water at about 22°C, steam at about 100°C, and poultry fat at about 32°C. Dry ingredients are added at a rate of about 1000 kg per hour. Water is

**Table 1: Kibble Composition - Dry Ingredients**

| Dry ingredients | Percent by weight |
|---|---|
| Corn protein concentrate | 93.5 |
| Dried egg product | 2.1 |
| Calcium carbonate | 1.1 |
| Fructo-oligosaccharides | 0.9 |
| Potassium chloride | 0.8 |
| Mono-sodium phosphate | 0.6 |
| Vitamin premix | 0.4 |
| Mineral premix | 0.3 |
| Choline chloride | 0.2 |
| DL-Methionine | 0.1 |

The resulting mix is fed continuously into a Model TX85 twin screw extruder from Wenger Manufacturing, Inc. (Sabetha, KS). Barrel temperatures span 52°C near the extruder inlet to about 114°C near the extruder outlet. Water is added at a rate of 20 kg per hour. At an extruder screw speed of 461 rpm and motor load of 84%, particles are extruded having moisture content of 18% as-is and wet bulk density of 214 grams per liter. Particles are created by extruding through six 6.8 millimeter diameter openings, expanding to about 12 millimeters in diameter, and cut to a length of about 8 millimeter thickness. These particles are conveyed to a dryer to achieve particle moisture content of 6.2% as-is, 242 grams per liter bulk density and calculated to have a corn protein concentrate solids content of about 87% as-is. The resulting vegetable protein-based core matrix may be coated as described herein.

### Example 2

In this Example, one embodiment of a vegetable protein-based core matrix comprising larger diameter dry food particles having a size, density, and shape suitable for coating and addition to a typical dry and/or soft moist pet food is produced.

The composition of the vegetable protein-based core matrix is set forth in Table 2. Dry food particles having a size, density, and shape for coating and addition to a typical dry and/or soft moist pet food are produced from the dry ingredients in Table 2 by the following process. The dry ingredients are added to a 1000 kg batch mixer and mixed sufficiently to make a homogenous blend. The liquid ingredients are combined with the dry ingredients in a continuous mixer Model DDC16 from Wenger Manufacturing, Inc. (Sabetha, KS). Liquid ingredients are water at about 23°C, steam at about 100°C, and poultry fat at about 40°C. Dry ingredients are added at a rate of about 888 kg per hour. Water is added at a rate of 127 kg per hour. Steam is added at a rate of 90 kg per hour. Poultry fat is added at a rate of 9 kg per hour. Ingredients are mixed with an average retention time of about 3.4 min and exit the continuous mixer at about 80°C.

**Table 2: Kibble Composition - Dry Ingredients**

| Dry ingredients | Percent by weight |
|---|---|
| Corn protein concentrate | 93.5 |
| Dried egg product | 2.1 |
| Calcium carbonate | 1.1 |
| Fructo-oligosaccharides | 0.9 |
| Potassium chloride | 0.8 |
| Mono-sodium phosphate | 0.6 |
| Vitamin premix | 0.4 |
| Mineral-premix- | 0.3 |
| Choline chloride | 0.2 |
| DL-Methionine | 0.1 |

The resulting mix is fed continuously into a Model TX85 twin screw extruder from Wenger Manufacturing, Inc. (Sabetha, KS). Barrel temperatures span 52°C near the extruder inlet to about 117°C near the extruder outlet. Water is added at a rate of 27 kg per hour. At an extruder screw speed of 461 rpm and motor load of 75%, particles are extruded having moisture content of 20% as-is and wet bulk density of 320 grams per liter. Particles are created by extruding through two 12.4 millimeter diameter openings, expanding to about 16 millimeters in diameter, and cut to a length of about 10 millimeter thickness. These particles are conveyed to a dryer to achieve particle moisture content of 6.7% as-is, 369 grams per liter bulk density, and calculated to have a corn protein concentrate solids content of about 86% as-is. The resulting vegetable protein-based core matrix may be coated as described herein.

### Example 3

In this Example, one embodiment of a vegetable protein-based core matrix comprising 100% by weight of vegetable protein dry matter is formulated in a smaller diameter dry food particle having a size, density, and shape suitable for coating and addition to a typical dry and/or soft moist pet food is produced.

The composition of the vegetable protein-based core matrix is set forth in Table 3. Dry food particles having a size, density, and shape for coating and addition to a typical dry and/or soft moist pet food are produced from the dry ingredients in Table 3 by the following process. The liquid ingredients are combined with the dry ingredient in a continuous mixer Model DDC16 from Wenger Manufacturing, Inc. (Sabetha, KS). Liquid ingredients are water at about 23°C, steam at about 100°C, and poultry fat at about 32°C. Dry ingredients are added at a rate of about 698 kg per hour. Water is added at a rate of 105 kg per hour. Steam is added at a rate of 70 kg per hour. Poultry fat is added at a rate of 7 kg per hour. Ingredients are mixed with an average retention time of about 3.9 min and exit the continuous mixer at about 80°C.

The resulting mix is fed continuously into a Model TX85 twin screw extruder from Wenger Manufacturing, Inc. (Sabetha, KS). Barrel temperatures span 53°C near the extruder inlet to about 96°C near the extruder outlet. Water is added at a rate of 28 kg per hour. At an extruder screw speed of 401 rpm and motor load of 80%, particles are extruded having moisture content of 20% as-is and wet bulk density of 248 grams per liter. Particles are created by extruding through eighteen 3.5 millimeter diameter openings, expanding to about 5.7 millimeters in diameter, and cut to a length of about 4.2 millimeter thickness. These particles are conveyed to a dryer to achieve particle moisture content of 5.9% as-is, 299 grams per liter bulk density, and calculated to have a corn protein concentrate solids content of about 93% as-is. The resulting vegetable protein-based core matrix may be coated as described herein.

**Table 3: Kibble Composition - Dry Ingredients**

| Dry Ingredient | Percent by weight |
|---|---|
| Corn Protein Concentrate | 100 |

### Example 4

In this Example, one embodiment of a vegetable protein-based core matrix comprising vegetable protein and an alternative protein source is formulated in a dry food particle having a size, density, and shape suitable for coating and addition to a typical dry and/or soft moist pet food is produced.

The composition of the vegetable protein-based core matrix including an alternate protein source (chicken by-product meal) is set forth in Table 4. Dry food particles having a size, density, and shape for coating and addition to a typical dry and/or soft moist pet food are produced from the dry ingredients in Table 4 by the following process. The dry ingredients are added to a 1000 kg batch mixer and mixed sufficiently to make a homogenous blend. The liquid ingredients are combined with the dry ingredients in a continuous mixer Model DDC16 from Wenger Manufacturing, Inc. (Sabetha, KS). Liquid ingredients are water at about 23°C, steam at about 100°C, and poultry fat at about 32°C. Dry ingredients are added at a rate of about 995 kg per hour. Water is added at a rate of 128 kg per hour. Steam is added at a rate of 99 kg per hour. Poultry fat is added at a rate of 7.5 kg per hour. Ingredients are mixed with an average retention time of about 4 min and exit the continuous mixer at about 86°C.

The resulting mix is fed continuously into a Model TX85 twin screw extruder from Wenger Manufacturing, Inc. (Sabetha, KS). Barrel temperatures span 53°C near the extruder inlet to about 120°C near the extruder outlet. Water is added at a rate of 20 kg per hour. At an extruder screw speed of 461 rpm and motor load of 76%, particles are extruded having moisture content of 19% as-is and wet bulk density of 392 grams per liter. Particles are created by extruding through six 6.8 millimeter diameter openings, expanding to about 8 millimeters in diameter, and cut to a length of about 7.5 millimeter thickness. These particles are conveyed to a dryer to achieve particle moisture content of 5.6% as-is, 397 grams per liter bulk density, and calculated to have a corn protein concentrate solids content of about 67% as-is. The resulting vegetable protein-based core matrix may be coated as described herein.

**Table 4: Kibble Composition - Dry Ingredients**

| Dry ingredients | Percent by weight |
|---|---|
| Corn protein concentrate | 71.4 |
| Chicken by-product meal | 22.1 |
| Dried egg product | 2.1 |
| Calcium carbonate | 1.1 |
| Fructo-oligosaccharides | 0.9 |
| Potassium chloride | 0.8 |
| Mono-sodium phosphate | 0.6 |
| Vitamin premix | 0.4 |
| Mineral premix | 0.3 |
| Choline chloride | 0.2 |
| DL-Methionine | 0.1 |

### Example 5

In this Example, one embodiment of a vegetable protein-based core matrix comprising 100% by weight of vegetable protein dry matter is formulated in a dry food particle having a size, density, and shape suitable for coating and addition to a typical dry and/or soft moist pet food is produced. Alternate to twin screw extrusion, single screw extrusion is employed to make dry food particles.

The composition of the vegetable protein-based core matrix is set forth in Table 5. Dry food particles having a size, density, and shape for coating and addition to a typical dry and/or soft moist pet food are produced from the dry ingredients in Table 5 by the following process. The liquid ingredients are combined with the dry ingredient in a continuous mixer Model DDC16 from Wenger Manufacturing, Inc. (Sabetha, KS). Liquid ingredients are water at about 23°C, steam at about 100°C, and hot poultry fat. Dry ingredients are added at a rate of about 1496 kg per hour. Water is added at a rate of 224 kg per hour. Steam is added at a rate of 152 kg per hour. Poultry fat is added at a rate of 15 kg per hour. Ingredients exit the continuous mixer at about 95°C.

The resulting mix is fed continuously into a Model X165 single screw extruder from Wenger Manufacturing, Inc. (Sabetha, KS). Barrel temperatures span 47°C near the extruder inlet, 82°C near steam injection, to about 62°C near the extruder outlet. Water is added at a rate of 30 kg per hour. _Steam is added at a rate of 40 kg per hour. At an extruder screw speed of 240 rpm and motor load of 89%, cohesive particles are extruded having moisture content of 23% as-is and wet bulk density of 242 grams per liter. Particles are created by extruding through four 6.4 millimeter diameter openings, expanding to about 8.6 millimeters in diameter, and cut to a length of about 7.2 millimeter thickness. These particles are conveyed to a dryer to achieve particle moisture content of 6.6% as-is. 392 grams per liter bulk density, and calculated to have a corn protein concentrate solids content of about 92% as-is. The resulting vegetable protein-based core matrix may be coated as described herein.

**Table 5: Kibble Composition - Dry Ingredients**

| Dry Ingredient | Percent by weight |
|---|---|
| Corn Protein Concentrate | 100 |

### Example 6

In this Example, one embodiment of a vegetable protein-based core matrix comprising vegetable protein dry matter is formulated in a dry food particle having a size, density, and shape suitable for coating and addition to a typical dry and/or soft moist pet food is produced. Alternate particle colors can be created by adding colorants. In the present Example, liquid caramel coloring is added.

The composition of the vegetable protein-based core matrix is set forth in Table 6. Dry food particles having a size, density, and shape for coating and addition to a typical dry and/or soft moist pet food are produced from the dry ingredients in Table 6 by the following process. The liquid ingredients are combined with the dry ingredients in a continuous mixer Model DC from Wenger Manufacturing, Inc. (Sabetha, KS). Liquid ingredients are water, steam at about 100°C, and caramel at ambient temperature. Dry ingredients are added at a rate of about 180 kg per hour. Water is added at a rate of about 24 kg per hour. Steam is added. Liquid caramel is added at a rate of 6 kg per hour. Ingredients exit the continuous mixer at about 74°C.

The resulting mix is fed continuously into a Model X20 single screw extruder from Wenger Manufacturing, Inc. (Sabetha, KS). Barrel temperatures span 74°C near the extruder inlet, followed by 76°C and 97°C, to about 136°C near the extruder outlet. At an extruder screw speed of 500 rpm and motor load of about 48%, particles are extruded having moisture content of 18% as-is and wet bulk density of 350 grams per liter. Particles are created by extruding through one 5.9 millimeter diameter opening, expanding to about 8.8 millimeters in diameter, and cut to a length of about 7.2 millimeter thickness. These particles are conveyed to a dryer to achieve particle moisture content of 9.3% as-is, 367 grams per liter bulk density, and calculated to have a corn protein concentrate solids content of about 83% as-is. The resulting vegetable protein-based core matrix may be coated as described herein.

**Table 6: Kibble Composition - Dry Ingredients**

| Dry ingredients | Percent by weight |
|---|---|
| Corn protein concentrate | 93.5 |
| Dried egg product | 2.1 |
| Calcium carbonate | 1.0 |
| Fructo-oligosaccharides | 0.9 |
| Potassium chloride | 0.8 |
| Mono-sodium phosphate | 0.6 |
| Vitamin premix | 0.4 |
| Mineral premix | 0.3 |
| Choline chloride | 0.2 |
| DL-Methionine | 0.1 |

### Example 7

In this Example, one embodiment of a vegetable protein-based core matrix comprising vegetable protein dry matter is formulated in a dry food particle having a size, density, and shape suitable for coating and addition to a typical dry and/or soft moist pet food is produced. Alternate particle densities can be created by adding fat (liquid poultry fat) and larger die opening.

The composition of the vegetable protein-based core matrix is set forth in Table 7. Dry food particles having a size, density, and shape for coating and addition to a typical dry and/or soft moist pet food are produced from the dry ingredients in Table 7 by the following process. The liquid ingredients are combined with the dry ingredient in a continuous mixer Model DC from Wenger Manufacturing, Inc. (Sabetha, KS). Liquid ingredients are water, steam at about 100°C, poultry fat at about 40°C, and caramel at ambient temperature. Dry ingredients are added at a rate of about 180 kg per hour. Water is added at a rate of about 11 kg per hour. Steam is added. Liquid caramel is added at a rate of about 6 kg per hour. Poultry fat is added at a rate of 4.9 kg per hour. Ingredients exit the continuous mixer at about 93°C.

The resulting mix is fed continuously into a Model X20 single screw extruder from Wenger Manufacturing, Inc. (Sabetha, KS). Barrel temperatures span 86°C near the extruder inlet, followed by 74°C and 108°C, to about 141°C near the extruder outlet. At an extruder screw speed of 500 rpm and motor load of about 42%, particles are extruded having moisture content of 15.7% as-is and wet bulk density of 430 grams per liter. Particles are created by extruding through one 8.1 millimeter diameter opening, expanding to about 11.1 millimeters in diameter, and cut to a length of about 7.4 millimeter thickness. These particles are conveyed to a dryer to achieve particle moisture content of 6.5% as-is. 430 grams per liter bulk density, and calculated to have a corn protein concentrate solids content of about 86% as-is.

**Table 7: Kibble Composition - Dry Ingredients**

| Dry ingredients | Percent by weight |
|---|---|
| Corn protein concentrate | 93.5 |
| Dried egg product | 2.1 |
| Calcium carbonate | 1.0 |
| Fructo-oligosaccharides | 0.9 |
| Potassium chloride | 0.8 |
| Mono-sodium phosphate | 0.6 |
| Vitamin premix | 0.4 |
| Mineral premix | 0.3 |
| Choline chloride | 0.2 |
| DL-Methionine | 0.1 |

### Example 8 - Coating Example

In this Example, a vegetable protein-based core matrix is coated with a probiotic enriched coating to make an active kibble. To make a probiotic enriched dog food, the active kibble (i.e., one enriched with probiotics) was mixed with non-probiotic enriched kibble.

The active kibble was made using about 8000 g of core kibbles consisting of an extruded vegetable protein (produced according to the method described in Example 1) which are introduced into a paddle mixer by a hopper located above the paddle mixer. The mixer is a model Bella 32-liter capacity fluidized zone mixer manufactured by Dynamic Air Inc.. St Paul, Minn., USA. The kibbles are pre-cooled with a chiller to about 0° C prior to adding them to the mixer. Once the kibbles have been added to the mixer the paddles are rotated to fluidize the kibbles. The paddles are rotated at about 94 RPM and a Froude number of about 1.1.

About 6.6 g of a dehydrated *Bifidobacteria animalis* AHC7 (NCIMB 41199) with an activity of 1.5 x 10¹¹ colony forming units per gram are mixed thoroughly into about 2000 g fat using a kitchen mixer to form a mixture. The high melting fat is K.L.X., a partially hydrogenated soybean/cottonseed oil blend manufactured by Loders Croklaan, Inc., Channahon, IL, USA. The fat-bifidobacteria mixture is added to the kibbles in the fluidizing mixer over the course of about one minute by pumping the mixture from a beaker through a silicone tubing line to a point about 25 cm above the fluidized zone in the center of the mixers using a Cole-Parmer model 07550-30 peristaltic pump using two parallel Masterflex L/S Easyload II pump heads. The temperature of the fat is about 56°C and is added to the center of the mixer over the fluidized zone. At the end of the addition of the mixture, the paddle mixing of the kibbles is continued for about 10 seconds then the door at the bottom of the mixer are opened to dump the coated kibbles into a metal receiver.

Visual examination of the kibbles shows that the mixture is evenly coated over the surface of the kibbles to form a solid fat layer. Slicing several of the kibbles in half confirms that the distribution of the solid fat around the surface of the individual kibbles is substantially even. Subsequent bacteria culture testing performed on the product shows the activity meets the desired target of 2 x 10⁹ colony forming units per 20 g of coated kibbles. Non-probiotic enriched kibbles consisted of dog food kibble (lams MiniChunks, available from the lams Co. Dayton, OH, USA) comprised of 27.4% protein, 15.9% fat, 7.4% moisture and 7.4% ash. The final product is a mixture of 10% by weight active kibble with 90% non-probiotics enriched kibbles.

### Example 9 - Coating Example

In this Example, a vegetable protein-based core matrix is coated with a probiotic enriched coating and a second top coating to make an active kibble. To make a probiotic enriched dog food, the active kibble (i.e., one enriched with probiotics) was mixed with non-probiotic enriched kibble.

The active kibble was made using about 8000 g of core kibbles consisting of an extruded vegetable protein (produced according to the method described in Example 1) which are introduced into a paddle mixer via a hopper located above the paddle mixer. The mixer is a model Bella 32-liter capacity fluidized zone mixer manufactured by Dynamic Air Inc., St Paul, Minn., USA. The kibbles are pre-cooled with a chiller to about 0°C prior to adding them to the mixer. Once the kibbles have been added to the mixer the paddles are rotated to fluidize the kibbles. The paddles are rotated at about 94 RPM and a Froude number of about 1.1.

The higher melting fat in the first probiotic-enriched coat is Paramount B brand partially hydrogenated palm kernel oil manufactured by Loders Croklaan, Inc., Channahon, IL, USA. About 7.1 g of a dehydrated *Bifidobacteria animalis* AHC7 (NCIMB 41199) with an activity of 1.5 x 10¹¹ colony forming units per gram are mixed thoroughly into about 1100 g Paramount B using a kitchen mixer to form a mixture. The fat-bifidobacteria mixture is added to the fluidizing mixer over the course of about one minute by pumping the mixture from a beaker through a silicone tubing line to a point about 25 cm above the fluidized zone in the center of the mixers using a Cole-Parmer model 07550-30 peristaltic pump using two parallel Masterflex L/S Easyload II pump heads. The temperature of the Paramount B is about 37°C and is added to the center of the mixer over the fluidized zone. At the end of the addition of the mixture, the paddle mixing of the kibbles is continued for about 10 seconds then the door at the bottom of the mixer are opened to dump the coated kibbles into a metal receiver.

The higher melting fat in the second, outer coating is K.L.X., a partially hydrogenated soybean/cottonseed oil blend manufactured by Loders Croklann, Inc., Channahon, IL, USA. The coated kibbles are then returned to the chiller to be cooled to about 0 C. The cooled coated kibbles are returned to the paddle mixer, and K.L.X. melted to about 56°C is added to the mixer in the same manner as the first coating of Paramount B. At the end of the addition of the fat, the paddle mixing of the kibbles is continued for about 10 seconds then the door at the bottom of the mixer are opened to dump the coated kibbles into a metal receiver.

Visual examination of the kibbles shows that the fats are evenly coated over the surface of the kibbles to form two solid fat coats. Slicing several of the kibbles in half confirms that the distribution of the solid fat coats around the surface of the individual kibbles is substantially even. Subsequent bacteria culture testing performed on the product shows the activity meets the desired target of 2 x 10⁹ colony forming units per 20 g of coated kibbles. The non-probiotic enriched kibbles consisted of dog food kibble (lams MiniChunks, available from the lams Co. Dayton, OH, USA) comprised of 27.4% protein, 15.9% fat, 7.4% moisture and 7.4% ash. The final product is a mixture of 10% by weight active kibble with 90% non-probiotics enriched kibbles.

### Example 10 - Aroma Analysis

In this Example, the aroma of a kibble formed from a vegetable protein-based core matrix is compared to the aroma of kibbles formed from an animal sourced (chicken) protein kibble. In animal foods, a desirable aroma may attract the animal to eat a nutritious product and may also be pleasing to the owner. The present Example uses Solid Phase MicroExtraction Gas Chromatography/Mass Spectrometry (SPME-GC-MS) to analyze pet food samples for compounds associated with good aroma compounds and malodor aroma compounds.

The following procedure was used to analyze the headspace volatiles above a pet food sample. A kibble having a vegetable protein-based core matrix (CPC) was compared with a kibble formed using chicken by-product meal. The kibble product was weighed (1.95 - 2.00 g) into a SPME headspace vial (22 mL with septum cap) and the vial capped. Duplicates of each sample to be analyzed were prepared. The samples were placed into an autosampler tray of a Gerstel MPS 2 autosampler (Gerstel, Inc. Linthicom, MD, USA). The samples are heated to 75°C for 10 minutes (equilibration time) and then sampled with a 2 cm Carb/DVB/PDMS SPME fiber (Supelco, Bellefonte, PA, USA) at 75°C for 10 min. The SPME fiber is then desorbed into the GC inlet (250°C) of an Agilent 6890GC-5973 MS for 8 min. The GC is equipped with a Restek Stabilwax column 30 m x 0.25 mm x 0.25 µm film. The GC temperature is initially 50°C and held at this temperature for 1 min, then ramped at 15°C/min to 240°C and held for 5 min. The chromatogram is measured against standard retention times/target ions using Chemstation software, with the peaks corresponding to specific compounds collected using extracted ion chromatograms (EIC).

SPME-GC-MS analysis of the kibbles revealed that kibbles made with CPC resulted in a low odor product compared to a kibble made with chicken by-product meal (CBPM). The CPC kibble showed substantial reduction of malodor acids, 3-methyl butyric acid, butanoic acid, pentanoic acid and hexanoic acid, compared to the CBPM kibble. The results for malodorous acid compounds are presented in Table 8.

SPME-GC-MS analysis of the kibbles for malodors developed from oxidized fat aroma resulting from rancidity. The fat in the CPC kibble comes from a separate raw material source (chicken fat) that is stabilized as a pure fat source. The CPC based kibble showed much lower lipid oxidation compounds compared to a CBPM kibble.
The results for malodorous oxidation compounds are presented in Table 9.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

**Table 8: Malodorous Acid Content**

| **Product** | **Acetic acid** | **Propionic acid** | **3-Methylbutyric acid** | **Butanoic acid** | **Pentanoic acid** | **Hexanoic acid** | **4-Methyl pentanoic acid** |
|---|---|---|---|---|---|---|---|
| Chicken-based kibbles #1 | 18712436 | 6651430 | 892996 | 10342749 | 2933528 | 6494897 | 127987 |
| Chicken-based kibbles #2 | 19408597 | 6550664 | 2710114 | 42450011 | 1336058 | 1644489 | 304991 |
| Corn Protein Concentrate-based kibbles | 16095623 | 3078146 | 801862 | 8028607 | 575071 | 1746261 | 118810 |

**Table 9: Malodorous Lipid Oxidation Compounds**

| **Product** | **Hexanal** | **Heptanal** | **2-Pentylfuran** | **Octanal** | **1-Octen-3-ol** | **3,5-Octadien-3-one** | **Nonanal** |
|---|---|---|---|---|---|---|---|
| Chicken-based kibbles #1 | 7864360 | 2733784 | 2778785 | 1142677 | 6661130 | 1750431 | 2034848 |
| Chicken-based kibbles #2 | 1609501 | 970282 | 2070812 | 277503 | 4090726 | 374212 | 911914 |
| Corn Protein Concentrate-based kibbles | 1655605 | 921055 | 1149164 | 307426 | 1827551 | 394194 | 965334 |

## Claims

1. An animal feed kibble comprising:
a protein-based core matrix that is greater than 70% by weight of a vegetable protein, wherein the protein-based core is free of a matrix of gelatinized starch; and
at least one coating comprising a fat and at least one additive, wherein the coating is on a surface of the protein-based core.

2. The animal feed kibble of claim 1, wherein the protein-based core matrix comprises a vegetable protein selected from the group consisting of distiller's dried grain, distiller's dried grain solubles, corn protein concentrate, corn gluten meal, soy protein isolate, soy protein concentrate, wheat gluten, and combinations of any thereof.

3. The animal feed kibble of claim 1, wherein the kibble comprises from 25% to 99.99% by weight of the protein-based core matrix.

4. The animal feed kibble of claim 1, wherein the at least one coating comprises at least one active coating on the surface of the protein-based core matrix.

5. The animal feed kibble of claim 1, wherein the at least one coating comprises at least one biological coating on the surface of the protein-based core matrix.

6. The animal feed kibble of claim 5, wherein the at least one biological coating comprises at least one probiotic-enriched coating.

7. The animal feed kibble of claim 6, wherein the kibble comprises from 0.01% to 75% by weight of the probiotic-enriched coating.

8. A method for forming an animal feed kibble comprising:
extruding a protein-based core matrix that is greater than 70% by weight of a vegetable protein, wherein the protein-based core is substantially free of a matrix of gelatinized starch; and
coating at least a portion of a surface of the protein-based core matrix with a coating comprising a probiotic.

9. The method of claim 8, wherein the protein-based core matrix comprises a vegetable protein selected from the group consisting of distiller's dried grain, distiller's dried grain solubles, corn protein concentrates, corn gluten meal, soy protein isolates, soy protein concentrates, wheat gluten, and combinations of any thereof.

10. The method of claim 8, further comprising coating at least a portion of a surface of the probiotic coating with a second coating comprising at least one partially hydrogenated plant oil.

11. A kibble-type pet food comprising:
a first kibble comprising:
a source of protein of from 16% to 50% by weight of the first kibble;
a source of fat of from 5% to 35% by weight of the first kibble; and
a source of carbohydrate; and
a second kibble comprising :
a protein-based core matrix that *is greater than 70% by weight of a vegetable protein , wherein the protein-based core* is free of a matrix of gelatinized starch, wherein the second kibble further comprises: at least one active coating on at least a portion of a surface of the protein-based core matrix and wherein the at least one active coating is a probiotic-enriched coating.

## Patentansprüche

1. Tiertrockenfutter, umfassend:
eine proteinbasierte Kernmatrix, die zu mehr als 70 Gew.-% ein pflanzliches Protein ist, wobei der proteinbasierte Kern frei von einer Matrix gelatinierter Stärke ist; und
mindestens eine Beschichtung, umfassend ein Fett und mindestens einen Zusatzstoff, wobei die Beschichtung auf einer Oberfläche des proteinbasierten Kerns ist.

2. Tiertrockenfutter nach Anspruch 1, wobei die proteinbasierte Kernmatrix ein pflanzliches Protein umfasst, das ausgewählt ist aus der Gruppe bestehend aus Treber, Trockenschlempe, Maisproteinkonzentrat, Maiskleber, Sojaproteinisolat, Sojaproteinkonzentrat, Weizengluten und Kombinationen von beliebigen davon.

3. Tiertrockenfutter nach Anspruch 1, wobei das Trockenfutter von 25 Gew.-% bis 99,99 Gew.-% die proteinbasierte Kernmatrix umfasst.

4. Tiertrockenfutter nach Anspruch 1, wobei die mindestens eine Beschichtung mindestens eine Wirkstoffbeschichtung auf der Oberfläche der proteinbasierten Kernmatrix umfasst.

5. Tiertrockenfutter nach Anspruch 1, wobei die mindestens eine Beschichtung mindestens eine biologische Beschichtung auf der Oberfläche der proteinbasierten Kernmatrix umfasst.

6. Tiertrockenfutter nach Anspruch 5, wobei die mindestens eine biologische Beschichtung mindestens eine probiotisch angereicherte Beschichtung umfasst.

7. Tiertrockenfutter nach Anspruch 6, wobei das Trockenfutter von 0,01 Gew.-% bis 75 Gew.-% die probiotisch angereicherte Beschichtung umfasst.

8. Verfahren zum Bilden eines Tiertrockenfutters, umfassend:
Extrudieren einer proteinbasierten Kernmatrix, die zu mehr als 70 Gew.-% ein pflanzliches Protein ist, wobei der proteinbasierte Kern im Wesentlichen frei von einer Matrix gelatinierter Stärke ist; und
Beschichten mindestens eines Abschnitts einer Oberfläche der proteinbasierten Kernmatrix mit einer Beschichtung, die ein Probiotikum umfasst.

9. Verfahren nach Anspruch 8, wobei die proteinbasierte Kernmatrix ein pflanzliches Protein umfasst, das ausgewählt ist aus der Gruppe bestehend aus Treber, Trockenschlempe, Maisproteinkonzentraten, Maiskleber, Sojaproteinisolaten, Sojaproteinkonzentraten, Weizengluten und Kombinationen von beliebigen davon.

10. Verfahren nach Anspruch 8, ferner umfassend das Beschichten von mindestens einem Abschnitt einer Oberfläche der probiotischen Beschichtung mit einer zweiten Beschichtung, die mindestens ein teilweise gehärtetes Pflanzenöl umfasst.

11. Trockenfutterartige Tiernahrung, umfassend:
ein erstes Trockenfutter, umfassend:
eine Proteinquelle von 16 Gew.-% bis 50 Gew.-% des ersten Trockenfutters;
eine Fettquelle von 5 Gew.-% bis 35 Gew.-% des ersten Trockenfutters; und
eine Kohlenhydratquelle; und
ein zweites Trockenfutter, umfassend:
eine proteinbasierte Kernmatrix, die zu mehr als 70 Gew.-% ein pflanzliches Protein ist, wobei der proteinbasierte Kern frei von einer Matrix aus gelatinierter Stärke ist, wobei das zweite Trockenfutter ferner Folgendes umfasst: mindestens eine Wirkstoffbeschichtung auf mindestens einem Abschnitt einer Oberfläche der proteinbasierten Kernmatrix und wobei die mindestens eine Wirkstoffbeschichtung eine probiotisch angereicherte Beschichtung ist.

## Revendications

1. Granulé d'alimentation pour animal comprenant :
une matrice centrale à base de protéine qui représente plus de 70 % en poids d'une protéine végétale, dans lequel la partie centrale à base de protéine est dépourvue d'une matrice d'amidon gélatiné ; et
au moins un revêtement comprenant une graisse et au moins un additif, dans lequel le revêtement est sur une surface de la partie centrale à base de protéine.

2. Granulé d'alimentation pour animal selon la revendication 1, dans lequel la matrice centrale à base de protéine comprend une protéine végétale choisie dans le groupe constitué de drêches séchées de distillerie, produits solubles de drêches séchées de distillerie, concentré de protéines de maïs, farine de gluten de maïs, isolat de protéines de soja, concentré de protéines de soja, gluten de blé, et des combinaisons de n'importe lesquels de ceux-ci.

3. Granulé d'alimentation pour animal selon la revendication 1, dans lequel le granulé comprend de 25 % à 99,99 % en poids de la matrice centrale à base de protéine.

4. Granulé d'alimentation pour animal selon la revendication 1, dans lequel l'au moins un revêtement comprend au moins un revêtement actif sur la surface de la matrice centrale à base de protéine.

5. Granulé d'alimentation pour animal selon la revendication 1, dans lequel l'au moins un revêtement comprend au moins un revêtement biologique sur la surface de la matrice centrale à base de protéine.

6. Granulé d'alimentation pour animal selon la revendication 5, dans lequel l'au moins un revêtement biologique comprend au moins un revêtement enrichi en probiotique.

7. Granulé d'alimentation pour animal selon la revendication 6, où le granulé comprend de 0,01 % à 75 % en poids du revêtement enrichi en probiotique.

8. Procédé pour former un granulé d'alimentation pour animal comprenant :
l'extrusion d'une matrice centrale à base de protéine qui représente plus de 70 % en poids d'une protéine végétale, dans lequel la partie centrale à base de protéine est essentiellement dépourvue d'une matrice d'amidon gélatiné ; et
le revêtement d'au moins une partie d'une surface de la matrice centrale à base de protéine avec un revêtement comprenant un probiotique.

9. Procédé selon la revendication 8, dans lequel la matrice centrale à base de protéine comprend une protéine végétale choisie dans le groupe constitué de drêches séchées de distillerie, produits solubles de drêches séchées de distillerie, concentrés de protéines de maïs, farine de gluten de maïs, isolats de protéines de soja, concentrés de protéines de soja, gluten de blé, et des combinaisons de n'importe lesquels de ceux-ci.

10. Procédé selon la revendication 8, comprenant en outre le revêtement d'au moins une partie d'une surface du revêtement probiotique avec un deuxième revêtement comprenant au moins une huile végétale partiellement hydrogénée.

11. Aliment pour animal de compagnie de type granulé comprenant :
un premier granulé comprenant :
une source de protéine représentant de 16 % à 50 % en poids du premier granulé ;
une source de graisse représentant de 5 % à 35 % en poids du premier granulé ; et
une source d'hydrate de carbone ; et
un deuxième granulé comprenant :
une matrice centrale à base de protéine qui représente *plus de 70 % en poids d'une protéine végétale, dans lequel la partie centrale à base de protéine* est dépourvue d'une matrice d'amidon gélatiné, dans lequel le deuxième granulé comprend en outre : au moins un revêtement actif sur au moins une partie d'une surface de la matrice centrale à base de protéine et dans lequel l'au moins un revêtement actif est un revêtement enrichi en probiotique.
